# EUROPÄISCHE PATENTSCHRIFT

(11) **EP 3 594 027 B1**
(45) Veröffentlichungstag und Bekanntmachung des Hinweises auf die Patenterteilung: **21.10.2020**
(21) Anmeldenummer: 18183479.7
(22) Anmeldetag: 13.07.2018
(51) Int. Cl.: B60D 1/54, B60D 1/62

(54) **STEUERMODUL UND VERFAHREN ZUR STEUERUNG EINER ANHÄNGERKUPPLUNG**
CONTROL MODULE AND METHOD OF CONTROLLING A TRAILER COUPLING
MODULE DE COMMANDE ET PROCÉDÉ DE COMMANDE D'UN ACCOUPLEMENT DE REMORQUE

(43) Veröffentlichungstag der Anmeldung: 15.01.2020
(73) Patentinhaber: Hofer, Evelyn, 6033 Burchrain (CH)
(72) Erfinder: Hofer, Evelyn, 6033 Burchrain (CH)
(74) Vertreter: Rausch Wanischeck-Bergmann Brinkmann

(56) Entgegenhaltungen:
- EP-A1- 1 380 446
- EP-A2- 1 084 872
- DE-A1-102011 052 433

## Beschreibung

Die Erfindung betrifft ein Steuermodul zur Steuerung einer Verschwenkbewegung einer mittels eines Motors vollautomatisch aus einer Ruheposition in eine Arbeitsposition und umgekehrt verschwenkbaren Anhängerkupplung eines Kraftfahrzeugs.

Anhängerkupplungen für Kraftfahrzeuge sind aus dem Stand der Technik an sich gut bekannt. Eines gesonderten druckschriftlichen Nachweises bedarf es an dieser Stelle deshalb nicht.

Anhängerkupplungen dienen typischerweise dazu, einen Anhänger mechanisch mit einem Zugfahrzeug, beispielsweise einem motorbetriebenen Kraftfahrzeug zu koppeln. Im verkoppelten Zustand bilden das Zugfahrzeug und der Anhänger einen Fahrzeugzug.

Aus dem Stand der Technik sind Anhängerkupplungen bekannt, die verschwenkbar am Kraftfahrzeug angeordnet sind. Eine solche verschwenkbare Anordnung gestattet es, die Anhängerkupplung im Benutzungsfall in ihre Arbeitsposition auszuschwenken. Wird die Anhängerkupplung nicht benötigt, kann sie in ihre Nicht-Gebrauchsstellung, die sogenannte Ruheposition verschwenkt werden.

Es sind aus dem Stand der Technik mittels eines Motors vollautomatisch verschwenkbare Anhängerkupplungen bekannt. Infolge einer benutzerseitigen Motorbetätigung verschwenkt die Anhängerkupplungen ohne weiteres Hinzutun des Benutzers aus ihrer Ruheposition in die Arbeitsposition und umgekehrt. Eine solch vollautomatische Verschwenkung ist insbesondere aus Gründen der vereinfachten Handhabung und des Bedienkomforts von Vorteil.

Es ist ferner aus der EP 2 862 732 A1 eine vollautomatisch verfahrbare Anhängerkupplung bekannt, bei der vor der Einleitung der Verschwenkbewegung vorgebbare Sicherheitsparameter und während der Verschwenkbewegung vorgebbare Verschwenkparameter gemessen und überprüft werden. Sind die Sicherheitsparameter erfüllt, wird die Verschwenkbewegung freigegeben. Liegen während der Verschwenkbewegung die Verschwenkparameter nicht mehr vor, wird die Verschwenkbewegung unverzüglich beendet und die Anhängerkupplung stillgesetzt. Die Verschwenk- und/oder Sicherheitsparameter umfassen insbesondere den Status von Kofferraum- bzw. Heckklappe und Fahrzeugzündung sowie den anliegenden Motorstrom des Motors der Anhängerkupplung.

Obgleich sich diese Anhängerkupplung in der Praxis bewährt hat, besteht weiterhin das Bedürfnis nach einer höheren Betriebssicherheit und eines höheren Benutzerkomforts.

Es ist ferner aus der EP 1 380 446 A1 eine Steuerung für eine verschwenkbare Anhängerkupplung bekannt, bei der die Geschwindigkeit des Kraftfahrzeugs vor der Durchführung einer Verschwenkbewegung überprüft wird. Die Verschwenkbewegung wird dabei nur freigegeben, wenn die Geschwindigkeit maximal 5 km/h beträgt. Nachteiligerweise ist diese Ausgestaltung vergleichsweise unpräzise und stellt ein Sicherheitsrisiko dar, da hier ein Verschwenken der Anhängerkupplung auch im rollenden Zustand des Kraftfahrzeugs möglich ist. Das Dokument EP 1 084 872 A2 offenbart ein Steuermodul gemäß dem Oberbegriff des Anspruchs 1 und ein Verfahren gemäß dem Oberbegriff des Anspruchs 7.

Die Erfindung bezieht sich auf ein Steuermodul, das der Steuerung einer Verschwenkbewegung einer mittels eines Motors vollautomatisch arbeitenden Anhängerkupplung dient. Es ist dabei die **Aufgabe** der Erfindung, ein Steuermodul sowie ein Verfahren zur Steuerung vorzuschlagen, die als Bestandteile eines Sicherheitskonzepts dazu dienen, die Betriebssicherheit zu erhöhen.

Zur **Lösung** dieser Aufgabe wird modulseitig mit der Erfindung vorgeschlagen ein Steuermodul der eingangs genannten Art, mit einer Prüfeinrichtung, die dazu ausgebildet ist, vor Beginn der Durchführung einer Verschwenkbewegung der Anhängerkupplung die Einhaltung eines vorgebbaren Sicherheitsparameters zu prüfen und nur im Falle der Einhaltung dieses Sicherheitsparameters eine Verschwenkbewegung der Anhängerkupplung freizugeben, wobei die Prüfeinrichtung dazu ausgebildet ist, als Sicherheitsparameter die Motordrehzahl des Kraftfahrzeugmotors zu prüfen.

Mittels der erfindungsgemäßen Prüfeinrichtung ist sichergestellt, dass eine Verschwenkbewegung der Anhängerkupplung überhaupt nur dann durchgeführt wird, wenn gewisse, vorgebbare Sicherheitsparameter eingehalten sind. Sobald ein oder mehrere dieser Sicherheitsparameter bei Einleitung der Verschwenkbewegung nicht erfüllt ist beziehungsweise sind, unterbleibt die benutzerseitig gewünschte Verschwenkbewegung, wobei der Benutzer bevorzugterweise hierüber durch einen visuellen und/oder akustischen Signalgeber informiert wird.

Der erfindungsgemäße Sicherheitsparameter ist die Motordrehzahl des Kraftfahrzeugmotors. Es kann aus Gründen des Komforts wünschenswert sein, die Anhängerkupplung auch bei eingeschalteter Zündung im Batteriebetrieb verschwenken zu können. Hierdurch ist es möglich, weitere elektrische/elektronische Funktionen des Kraftfahrzeugs, wie insbesondere das Radio, die Klimaanlage, die elektrischen Fensterheber usw., weiterhin zu nutzen. Durch die Nutzung der Motordrehzahl als Sicherheitsparameter kann dies realisiert werden. In Abgrenzung der aus dem Stand der Technik überprüften Sicherheitsparameter, Fahrzeuggeschwindigkeit oder Status der Zündung, erlaubt die Überprüfung der Motordrehzahl des Kraftfahrzeugs die präzise Erkennung eines Zustandes, in dem das Kraftfahrzeug steht und zusätzliche elektrische Funktionen des Kraftfahrzeugs weiterhin nutzbar sind. Ferner lassen sich durch die Nutzung der Motordrehzahl synergetische Effekte nutzen, da die Motordrehzahl von der Bordelektronik des Kraftfahrzeugs ohnehin überwacht und ausgewertet wird. Dies beispielsweise bei Kraftfahrzeugen mit Automatikgetriebe oder auch bei modernen Kraftfahrzeugen mit manuellem Getriebe für die Gangwechselempfehlung. Auf eine zusätzliche Sensorik zur Erfassung der Motordrehzahl kann mithin in vorteilhafter Weise verzichtet werden.

Vorzugsweise ist eine Verschwenkung dann möglich, wenn die Motordrehzahl "NULL" beträgt, sich der Fahrzeugmotor also im "OFF"-Zustand befindet. Hierdurch ist sichergestellt, dass die Anhängerkupplung nur im stehenden Zustand des Fahrzeugs verschwenkt werden kann. Das Steuermodul verfügt für die Abfrage der Drehzahlwerte vorzugsweise über eine erste Schnittstelle zur Bordelektronik des Kraftfahrzeugs. Als Quelle für die Drehzahlwerte dient vorzugsweise der CAN-Bus des Fahrzeugs. Das Steuermodul, vorzugsweise die Prüfeinrichtung, weist daher vorzugsweise eine CAN-Bus-Schnittstelle auf. Durch die datentechnische Nutzung des CAN-Busses wird die im Kraftfahrzeug bestehende Infrastruktur genutzt, ohne dass zusätzliche Sensoren erforderlich sind. Ferner handelt es sich bei einem CAN-Bus um ein standardisiertes Bauteil, welches in einer Vielzahl von Kraftfahrzeugen verbaut ist. Das erfindungsgemäße Verfahren erlaubt daher mit besonderem Vorteil die Nachrüstung von Kraftfahrzeugen mit dem erfindungsgemäßen Steuermodul.

Es ist gemäß einem bevorzugten Merkmal der Erfindung vorgesehen, dass die Prüfeinrichtung dazu ausgebildet ist, weitere Sicherheitsparameter zu überprüfen. Weitere Sicherheitsparameter im Sinne der Erfindung können beispielsweise der Zustand der Zündung des Kraftfahrzeugs, der Status der Heckklappe des Kraftfahrzeugs und/oder die Bestückung einer kraftfahrzeugseitig vorgesehenen Steckdose zur Stromversorgung des Anhängers sein. Dabei erfolgt eine Überprüfung der weiteren Sicherheitsparameter nur dann, wenn die über den CAN-Bus abzufragende Motordrehzahl nicht zur Verfügung steht. Die Prüfeinrichtung ist mithin dazu ausgebildet, bei Nichtverfügbarkeit der Motordrehzahl die weiteren Sicherheitsparameter zu überprüfen.

Die Überprüfung der weiteren Sicherheitsparameter dient dem Fall, dass die eigentlich gewünschte Abfrage der Motordrehzahl nicht möglich ist. Dies kann beispielsweise im Falle eines Defekts der Fall sein. Oder auch dann, wenn das Kraftfahrzeug nicht über einen CAN-Bus verfügt oder über den CAN-Bus die Motordrehzahl nicht abfragbar ist, was insbesondere bei Kraftfahrzeugen älteren Baujahrs der Fall sein kann. Das erfindungsgemäße Modul ist mithin dazu ausgerüstet, die Motordrehzahl über den CAN-Bus abzufragen. Ist dies mangels CAN-Bus und/oder aufgrund eines Fehlers am CAN-Bus und/oder der zugehörigen CAN-Bus-Schnittstelle nicht möglich, so erfolgt eine Abfrage der weiteren Sicherheitsparameter. Eine Abfrage der weiteren Sicherheitsparameter erfolgt indes nicht, wenn kraftfahrzeugseitig ein CAN-Bus vorhanden ist und ein Fehler bezüglich der Abfrage der Motordrehzahl nicht gegeben ist.

Es kann beispielsweise vorgesehen sein, dass der Schaltzustand der Zündung des Kraftfahrzeugs als Sicherheitsparameter genutzt wird. Danach ist eine Verschwenkbewegung der Anhängerkupplung überhaupt nur dann möglich, wenn die Zündung des Kraftfahrzeugs ausgeschaltet ist. Es wird so sichergestellt, dass eine Verschwenkbewegung nicht während der Fahrt, mithin bei eingeschalteter Zündung stattfinden kann.

Als weiterer Sicherheitsparameter kann die Stellung der Heckklappe des Kraftfahrzeugs dienen. So kann beispielsweise vorgesehen sein, dass eine Verschwenkbewegung der Anhängerkupplung überhaupt nur dann möglich ist, wenn die Heckklappe des Zugfahrzeugs geöffnet ist. Bei geschlossener Heckklappe, wenn also der für eine Einleitung einer Verschwenkbewegung der Anhängerkupplung benutzerseitig zu betätigende Taster nicht zugänglich ist, soll eine Verschwenkbewegung der Anhängerkupplung nicht gestattet sein. Es ist so sichergestellt, dass unter Umständen im Kofferraum des Kraftfahrzeugs sich hin und her bewegende Gegenstände zu einer ungewollten Bedienelementbetätigung und damit zu einer Verschwenkbewegung der Anhängerkupplung führen können.

Ein weiterer Sicherheitsparameter kann beispielsweise die Sensierung der fahrzeugseitig zur elektrischen Versorgung eines Anhängers vorgesehenen Steckdose sein. So kann insbesondere vorgesehen sein, dass bei einer angeschlossenen Steckdose, d. h. bei einem in die Steckdose gestecktem Stecker, eine Verschwenkbewegung der Anhängerkupplung nicht gestattet ist.

Die voraufgeführten Sicherheitsparameter kommen wie folgt zur Anwendung. Es erfolgt im benutzerseitigen Bedienfall eine Überprüfung der Motordrehzahl, und zwar über eine Abfrage über den CAN-Bus. Ergibt diese Abfrage, dass die Motordrehzahl "Null" beträgt, so erfolgt die benutzerseitig angeforderte Verschwenkbewegung der Anhängerkupplung. Ergibt die Abfrage indes, dass die Motordrehzahl ungleich "Null" ist, so unterbleibt die benutzerseitig angeforderte Verschwenkbewegung der Anhängerkupplung, was dem Benutzer bevorzugterweise auch angezeigt wird.

Ergibt die Anfrage indes, dass ein CAN-Bus nicht vorhanden ist oder die Motordrehzahl aufgrund eines Fehlers nicht abfragbar ist, so erfolgt eine analoge Erfassung weiterer Sicherheitsparameter. Dabei ist es bevorzugt, als weitere Sicherheitsparameter die Stellung der Zündung und die Stellung der Heckklappe abzufragen. Ist die Zündung ausgeschaltet und die Heckklappe geöffnet, so kann die benutzerseitig angeforderte Verschwenkbewegung der Anhängerkupplung durchgeführt werden. Ergibt die Abfrage indes, dass entweder die Zündung eingeschaltet ist oder die Heckklappe geschlossen ist, d. h. einer der beiden Sicherheitsparameter nicht erfüllt ist, so unterbleibt die benutzerseitig angeforderte Verschwenkbewegung der Anhängerkupplung.

Alternativ kann vorgesehen sein, dass bei einer analogen Abfrage der Sicherheitsparameter auch noch die Steckdose mit abgefragt wird, es also überprüft wird, ob die Steckdose angeschlossen ist, d. h. in die Steckdose ein Stecker eingesteckt ist. Gemäß dieser Alternative erfolgt also bei nicht vorhandenen CAN-Bus oder bei fehlerhaftem CAN-Bus eine analoge Abfrage von drei Sicherheitsparametern, nämlich der Zündung, der Heckklappe und der Steckdose, wobei eine Verschwenkbewegung der Anhängerkupplung nur dann durchgeführt wird, wenn die Abfrage aller drei Sicherheitsparameter positiv ausgefallen ist.

Gemäß einer weiteren Alternative ist vorgesehen, dass eine Digitalabfrage über den CAN-Bus sowie eine analoge Abfrage der weiteren Sicherheitsparameter stattfindet. Gemäß dieser Alternative erfolgt in der schon vorbeschriebenen Weise eine Abfrage der Motordrehzahl über eine CAN-Bus-Schnittstelle. Sofern diese Abfrage ergibt, dass die Motordrehzahl ungleich "Null" ist, unterbleibt die angeforderte Verschwenkbewegung der Anhängerkupplung und es werden auch keine weiteren Überprüfungen von Sicherheitsparametern durchgeführt. Ergibt die Überprüfung der Motordrehzahl indes, dass die Motordrehzahl bei "Null" liegt, so wird diese Abfrage als positiv gewertet. Eine Verschwenkbewegung der Anhängerkupplung findet gleichwohl noch nicht statt. Denn es werden zusätzlich zur Abfrage der Motordrehzahl weitere Sicherheitsparameter abgefragt, wie beispielsweise die Zündung und/oder die Heckklappe und/oder die Steckdose. Erst wenn die Abfrage auch dieser weiteren Sicherheitsparameter positiv ausfällt, erfolgt eine Verschwenkbewegung der Anhängerkupplung, wie sie vom Benutzer angefordert ist.

Das erfindungsgemäße Steuermodul verfügt über eine Prüfeinrichtung, die dazu ausgestattet ist, die Motordrehzahl abzufragen, und zwar über den CAN-Bus. Ist dies nicht möglich, insbesondere deshalb nicht, weil eine CAN-Bus-Schnittstelle nicht zur Verfügung steht, so kann über das erfindungsgemäße Steuermodul gleichwohl eine Sicherheitsabfrage erfolgen. Dies nämlich dadurch, dass eine analoge Sicherheitsabfrage erfolgt, und zwar beispielsweise von Zündung und Heckklappe. Das Modul ist insoweit bevorzugterweise derart ausgebildet, dass sowohl die Motordrehzahl abgefragt werden kann, und zwar digital, und dass weitere Sicherheitsparameter abgefragt werden können, und zwar analog, wobei verfahrensseitig eine analoge Abfrage unterbleibt, wenn die digitale Abfrage über den CAN-Bus bereits zu einem Ergebnis geführt hat, sei es das eine Verschwenkbewegung erlaubt wird oder eben nicht. Das erfindungsgemäße Steuermodul ist mithin geeignet, sowohl in Kombination mit Kraftfahrzeugen genutzt zu werden, die über einen CAN-Bus verfügen, als auch in Kombination mit solchen, die über keinerlei CAN-Bus-Schnittstellen verfügen. Sofern kraftfahrzeugseitig eine CAN-Bus-Schnittstelle zur Verfügung steht, kann gemäß der schon vorerläuterten Alternative vorgesehen sein, zur weiteren Erhöhung der Sicherheit sowohl eine Digitalabfrage über den CAN-Bus als auch eine analoge Abfrage weiterer Sicherheitsparameter vorzunehmen. Diese kombinierte Abfrage ist allerdings nur optional.

Das erfindungsgemäße Steuermodul kann mithin in drei unterschiedlichen Ausführungsformen genutzt werden, was bei der Erstinstallation des erfindungsgemäßen Steuermoduls bevorzugterweise voreingestellt werden kann, insbesondere durch die zum bestimmungsgemäßen Betrieb des Steuermoduls vorzusehende Software. Alternativ kann vorgesehen sein, auch die Hardware an unterschiedliche Ausführungsformen anzupassen. In diesem Zusammenhang ist es insbesondere bevorzugt, eine Basisplattform vorzusehen, die je nach gewünschter Ausführungsform mit Hardwarekomponenten zu bestücken ist. Je nach Ausführungsform kann dann an die unterschiedlichen Hardwarekomponenten angepasst eine entsprechende Software vorgesehen sein, die zur Umsetzung der jeweils gewünschten Ausführungsform mit der Hardware zu kombinieren ist. Gemäß der ersten Ausführungsform erfolgt eine Abfrage der Motordrehzahl über den CAN-Bus, d. h. ausschließlich digital. Eine analoge Abfrage findet in diesem Fall nicht statt, auch dann nicht, wenn ein Fehler am CAN-Bus vorliegt und eine Analogabfrage ergeben würde, dass eine Verschwenkung stattfinden kann. Gemäß einer zweiten Ausführungsform findet in Entsprechung der ersten Ausführungsform eine Digitalabfrage der Motordrehzahl über den CAN-Bus statt. Ergibt die Abfrage, dass ein Signal vom CAN-Bus zwar erwartet werden kann, dieses aber aufgrund eines CAN-busseitigen Fehlers nicht zur Verfügung steht, so erfolgt in einer zweiten Abfrage eine analoge Abfrage weiterer Sicherheitsparameter, so z. B. von Zündung und Heckklappe. Ist diese Abfrage positiv, kann die angeforderte Verschwenkbewegung eingeleitet werden. Alternativ kann anstelle einer analogen Abfrage eines weiteren Sicherheitsparameters eine Digitalabfrage über den CAN-Bus stattfinden, wobei in diesem Fall beispielsweise das Heckklappensignal digital abgefragt wird. Sollte eine Digitalabfrage des Heckklappensignals deshalb nicht möglich sein, weil der CAN-Bus defekt ist, so erfolgt aus sicherheitsrelevanten Überlegungen keinerlei Verschwenkbewegung der Anhängerkupplung. Gemäß einer dritten Ausführungsform steht ein CAN-Bus fahrzeugseitig nicht zur Verfügung, so dass das Modul zwar dazu geeignet ist, ein CAN-Bus-Signal abzufragen, dies aber mangels CAN-Bus nicht erfolgt und stattdessen von vornherein über eine analoge Abfrage weitere Sicherheitsparameter erfasst werden, insbesondere Zündung und Heckklappe.

Das erfindungsgemäße Steuermodul ist damit in vorteilhafter Weise sowohl für Kraftfahrzeuge mit CAN-Bus als auch für Kraftfahrzeuge ohne CAN-Bus einsetzbar. Bei Fahrzeugen mit CAN-Bus steht eine alternative Abfragemöglichkeit zur Verfügung für den Fall, dass das CAN-Bus-Signal insbesondere fehlerbedingt nicht zur Verfügung steht. Alternativ kann sowohl eine Abfrage über den CAN-Bus als auch eine analoge Abfrage stattfinden, was die Betriebssicherheit erhöht.

Gemäß einer bevorzugten Ausgestaltung der Erfindung ist es vorgesehen, dass das Steuermodul, vorzugsweise die Prüfeinrichtung, über wenigstens eine separate Schnittstelle zur Abfrage der weiteren Sicherheitsparameter verfügt. Hierdurch ist gewährleistet, dass auch im Falle eines ausbleibenden oder fehlerhaften Motordrehzahlsignals, etwa aufgrund eines Defekts des CAN-Bus-Systems, die weiteren Sicherheitsparameter weiterhin einer Überprüfung zugänglich sind. Das Steuermodul ist folglich dazu ausgebildet, die weiteren Sicherheitsparameter CAN-Bus-unabhängig abzufragen und zu überprüfen.

Gemäß einem bevorzugten Merkmal der Erfindung verfügt die Prüfeinrichtung über eine Datenverarbeitungseinrichtung, die dazu ausgebildet ist, die von ihr empfangenen, mit den Ist-Sicherheitsparametern assoziierten Signale vor der eigentlichen Überprüfung der Sicherheitsparameter einer Plausibilitätskontrolle zu unterziehen. Dabei werden die mit den Ist-Werten assoziierten Signale mit vorgebbaren Plausibilitätskriterien verglichen, die einen Rückschluss auf die Gültigkeit des Signals zulassen. Es ist hierbei insbesondere vorgesehen, die aktuell empfangenen Ist-Werte mit in einem Datenspeicher der Datenverarbeitungseinrichtung abrufbar hinterlegten früheren Werten abzugleichen. Es ist ferner bevorzugt, den jeweiligen Zeitpunkt des Signaleingangs mit vorgebbaren zeitbezogenen Erwartungsfenstern abzugleichen. Liegt beispielsweise ein Signaleingang zeitlich außerhalb des Erwartungsintervalls wird es als unplausibel und damit ungültig eingeordnet werden. Für die nachgeschaltete Überprüfung der Sicherheitsparameter werden jedoch nur gültige Signale zugelassen. Es kann gemäß einem bevorzugten Merkmal der Erfindung vorgesehen sein, ein Signal erst dann als gültig zu werten, wenn mehrere Plausibilitätskriterien kumulativ erfüllt sind.

Gemäß einem bevorzugten Merkmal der Erfindung erfolgt die Einleitung der Verschwenkbewegung ausschließlich mittels eines nur manuell vom Benutzer betätigbaren Bedienelements. Hierdurch ist sichergestellt, dass eine Verschwenkung der Anhängerkupplung nur auf ausdrücklichen Wunsch des Benutzers hin initiiert wird. In einer besonders bevorzugten Ausgestaltung der Erfindung wird die Verschwenkbewegung mittels des Bedienelements benutzerseitig eingeleitet, daraufhin die vorgebbaren Sicherheitsparameter geprüft und bei deren Einhaltung die Verschwenkbewegung freigegeben. Mit Freigabe können dann während der Verschwenkbewegung in nachfolgend beschriebener Weise Verschwenkparameter, vorzugsweise wenigstens die Verschwenkgeschwindigkeit, überwacht werden, um die Benutzersicherheit der Anhängerkupplungssteuerung weiter zu verbessern.

Gemäß einem weiteren Merkmal der Erfindung verfügt das Steuermodul über eine Steuereinrichtung, welche dazu ausgebildet ist, während einer Verschwenkbewegung der Anhängerkupplung vorgebbare Verschwenkparameter zu messen, die Messwerte mit vorgebbaren Sollwerten zu vergleichen und im Falle einer Überschreitung der Sollwerte die Verschwenkbewegung der Anhängerkupplung zu beenden, wobei die Steuereinrichtung eine Messeinrichtung zur Messung der Verschwenkparameter aufweist, wobei die Messeinrichtung dazu ausgebildet ist, als Verschwenkparameter die Verschwenkgeschwindigkeit der Anhängerkupplung zu messen.

Demgemäß soll aus Gründen der erhöhten Handhabungssicherheit ein bestimmungsgemäßes Verschwenken der Anhängerkupplung nur dann gestattet sein, wenn bestimmte Verschwenkparameter, vorzugsweise wenigstens eine vorgebbare maximale Verschwenkgeschwindigkeit, während der Verschwenkbewegung eingehalten werden. Sobald ein oder mehrere Verschwenkparameter während der Durchführung einer Verschwenkbewegung der Anhängerkupplung nicht oder nicht mehr erfüllt ist beziehungsweise sind, erfolgt ein sofortiges Stillsetzen der Anhängerkupplung, das heißt eine Beendigung der Verschwenkbewegung der Anhängerkupplung. Die Anhängerkupplung verbleibt damit vorerst in einer Zwischenposition zwischen Ruheposition und Arbeitsposition. Diese Zwischenposition wird im Folgenden als "Notposition" bezeichnet. Es ist vorzugsweise vorgesehen, die Verschwenkgeschwindigkeit der Anhängerkupplung zu messen, das Messergebnis in entsprechende Signale umzuwandeln und die den Messergebnissen entsprechenden Signale mit einer vorgebbaren maximalen Verschwenkgeschwindigkeit zu vergleichen. Es wird folglich die Verschwenkgeschwindigkeit während der Verschwenkbewegung der Anhängerkupplung überwacht. Sollte die gemessene Geschwindigkeit und/oder ein anderer bevorzugt vorgesehener Verschwenkparameter den vorgegebenen Sollwert überschreiten, wird die Verschwenkbewegung unverzüglich unterbrochen. "Unverzüglich" im Sinne der Erfindung bezeichnet dabei eine Reaktionszeitverzögerung zwischen Detektierung der Sollwertüberschreitung und der tatsächlichen Stillsetzung der Anhängerkupplung von maximal beispielsweise 1 s, vorzugsweise maximal 0,5 s, besonders bevorzugt maximal 0,25 s. Durch die erfindungsgemäße Ausgestaltung sind benutzerseitige Verletzungen und/oder Schäden an der Anhängerkupplung, die aus einer überhöhten Verschwenkgeschwindigkeit resultieren in vorteilhafter Weise ausgeschlossen. Insbesondere wird durch Wahl einer angemessenen Maximalgeschwindigkeit verhindert, dass die Anhängerkupplung bei einer Kollision mit einem sich im Schwenkweg befindlichen Objekt Schaden nimmt.

Bevorzugt ist die maximale Verschwenkgeschwindigkeit eine solche, bei der die Anhängerkupplung den Verschwenkweg zwischen Ruheposition und Arbeitsposition bei gegebener Motorleistung in nicht weniger als 3 bis 10 s, vorzugsweise nicht weniger als 4 bis.6 s, zurücklegt. Die maximale Verschwenkgeschwindigkeit ist dabei in Abhängigkeit der Länge des Verschwenkweges festzulegen.

Gemäß einer bevorzugten Ausgestaltung der Erfindung weist die Messeinrichtung eine Positionserfassungseinrichtung auf. Die Positionserfassungseinrichtung dient der Geschwindigkeitsmessung, indem sie aktuelle Verschwenkpositionen der Anhängerkupplung entlang des Verschwenkweges detektiert. Diese Verschwenkpositionen können anschließend von der Steuereinrichtung zeit- und distanzbezogen ausgewertet werden. Aus den bestimmten Zeiten und Distanzen kann dabei die Verschwenkgeschwindigkeit berechnet und mit dem hinterlegten Sollwert verglichen werden. Es ist dabei insbesondere vorgesehen, dass jeweils zwischen zwei aufeinanderfolgende Verschwenkpositionen ein Verschwenkabschnitt definiert ist. Vorzugsweise ist die Positionserfassungseinrichtung dazu ausgebildet, eine Vielzahl von Verschwenkpositionen entlang des Verschwenkweges detektieren zu können. Auf diese Weise wird eine nahezu lückenlose Geschwindigkeitsüberwachung der Anhängerkupplung gewährleistet.

Gemäß einer weiter bevorzugten Ausgestaltung der Erfindung weist die Positionserfassungseinrichtung zur Positionserfassung Positionsgeber auf. Es ist bevorzugt die Positionsgeber als Sensoren, insbesondere als Hall-Sensoren, auszubilden. Sensoren, insbesondere Hall-Sensoren, weisen hinsichtlich Messgenauigkeit und Komplexität besonders vorteilhafte Eigenschaften auf.

Gemäß einem bevorzugten Merkmal der Erfindung können während der Verschwenkbewegung weitere vorgebbare Verschwenkparameter überwacht werden. Diese vorgebbaren Verschwenkparameter, die während einer Verschwenkbewegung der Anhängerkupplung überwacht, das heißt mit vorgebbaren Sollwerten verglichen werden, können beispielsweise der am Verschwenkmotor der Anhängerkupplung anliegende Strom, die Drehzahl des Verschwenkmotors, ungültige Signale des Bedienelements, eine ausgeschaltete Zündung des Kraftfahrzeuges und/oder dergleichen Sensorsignale sein.

Die Überwachung des am Motor der Anhängerkupplung anliegenden Stroms dient dem Einklemmschutz. Fährt die Anhängerkupplung infolge eines nicht freien Verschwenkweges auf ein Hindernis auf, so führt dies aufgrund einer konstant bleibenden Batteriespannung des Kraftfahrzeugs zu einem erhöhten Stromverbrauch. Liegt dieser erhöhte Stromverbrauch über einem vorgebbaren Wert, erfolgt aus Sicherheitsgründen eine Notabschaltung, das heißt eine Beendigung der an sich noch nicht ordnungsgemäß durchgeführten Verschwenkbewegung. Sobald das Hindernis aus dem Verschwenkbereich der Anhängerkupplung entfernt ist, kann benutzerseitig oder automatisiert eine erneute Verschwenkbewegung der Anhängerkupplung eingeleitet werden. Als alternativer oder zusätzlicher Verschwenkparameter dient die Drehzahl des Verschwenkmotors ebenfalls dem Einklemmschutz. Fährt die Anhängerkupplung infolge eines nicht freien Verschwenkweges auf ein Hindernis auf, so führt dies zu einem erhöhten Drehmoment des Verschwenkmotors, was eine Verringerung der Drehzahl zur Folge hat. Selbstverständlich ist es als Einklemmschutz möglich, die ohnehin erfindungsgemäß erfasste Verschwenkgeschwindigkeit zu verwenden. Hierbei wird die gemessene Verschwenkgeschwindigkeit mit einem vorgebbaren minimalen Sollwert für die Verschwenkgeschwindigkeit verglichen. Bei Unterschreitung dieses Minimalwertes erfolgt aus Sicherheitsgründen eine Notabschaltung. Die gleichzeitige Verwendung der Verschwenkgeschwindigkeit als Verschwenkparameter zur Schaffung eines Übergeschwindigkeitsschutzes einerseits und eines Einklemmschutzes andererseits führt zu einer besonders vorteilhaften synergetischen Wirkung. Hierdurch kann insbesondere die Messeinrichtung und das Verfahren zur Steuerung insgesamt stark vereinfacht werden.

Gemäß einer bevorzugten Ausgestaltung der Erfindung ist es unabhängig von der Position in welcher sich die Anhängerkupplung befindet vorgesehen, dass eine erneute Verschwenkbewegung der Anhängerkupplung nur freigegeben wird, wenn der vorgebbare Sicherheitsparameter eingehalten wird beziehungsweise wieder eingehalten ist. In diesem Fall wird auch bei Einleitung einer Verschwenkbewegung aus der Position des Notstopps heraus die Verschwenkbewegung nur freigegeben, wenn der Sicherheitsparameter eingehalten wird.

Die Prüfeinrichtung und die Steuereinrichtung sind bevorzugterweise integraler Bestandteil ein und derselben elektronischen Schaltung.

Es ist gemäß einem bevorzugten Merkmal der Erfindung vorgesehen, dass auch im Falle der Einhaltung der Sicherheitsparameter in der Notposition nicht eine Fortführung der zuvor unterbrochenen Verschwenkbewegung der Anhängerkupplung automatisch einsetzt. Eine Wiederaufnahme der Verschwenkbewegung ist gemäß dieser bevorzugten Ausführungsform nur nach manueller Betätigung durch den Benutzer möglich. Dies ist aus Sicherheitsgründen deshalb von Vorteil, weil benutzerseitig zunächst einmal überprüft werden kann, aus welchem Grunde eine zuvor eingeleitete Verschwenkbewegung der Anhängerkupplung beendet worden ist. Sobald der Grund für die Beendigung der Verschwenkbewegung gefunden und beseitigt ist, kann benutzerseitig eine visuelle Prüfung der Anhängerkupplung auf insbesondere eine freie Verschwenkbewegung durchgeführt werden. Die erfindungsgemäße Ausgestaltung gestattet es mithin, eine Wiederaufnahme einer zuvor unterbrochenen Verschwenkbewegung erst dann zu ermöglichen, wenn benutzerseitig die Wiederaufnahme aktiv durch entsprechende Betätigung des zugehörigen Bedienelements bestätigt ist.

Es ist gemäß einem bevorzugten Merkmal der Erfindung vorgesehen, dass die Anhängerkupplung bei Wiederaufnahme der zuvor unterbrochenen Verschwenkbewegung aus der Notposition heraus zunächst zurück in ihre vorherige Ausgangsposition fährt. Dies kann die Ruhe- oder auch die Arbeitsposition sein, je nachdem, ob die vorherige Ausgangsposition die Arbeitsposition oder die Ruheposition war. Sobald die Anhängerkupplung in ihre vorherige Ausgangsposition zurückverfahren ist, kann entweder durch einen automatisierten Prozess oder durch eine nochmalige Betätigung durch den Benutzer die zuvor unterbrochene Verfahrbewegung erneut gestartet werden.

Mit dem bevorzugten Steuermodul ist mithin bei einer fehlerinduzierten Beendigung einer Verfahrbewegung der Anhängerkupplung sichergestellt, dass eine erneute Verfahrbewegung nicht automatisch infolge einer Fehlerbehebung einsetzt, sondern dass diese ausschließlich durch manuelle Betätigung seitens des Benutzers eingeleitet werden kann. Dabei erfolgt vorzugsweise zunächst ein Zurückverschwenken der Anhängerkupplung in die ehemalige Ausgangsposition oder ein Zurückverschwenken über eine Teilstrecke in diese Richtung. Erst nachdem diese erreicht ist, kann durch wiederholte Betätigung durch den Benutzer die eigentlich gewünschte Verschwenkbewegung der Anhängerkupplung in die andere Endstellung eingeleitet werden.

Eine nach der Erfindung bevorzugte Ausführungsform ergibt sich wie folgt. Während einer Verfahrbewegung der Anhängerkupplung, d. h. nach vorangegangener positiver Überprüfung der Sicherheitsparameter findet eine Überprüfung von Verfahrparametern statt. Zu den Verfahrparametern können auch die Sicherheitsparameter gehören, wobei die Verfahrbewegung auch bei Nicht-Einhalten der Sicherheitsparameter weiter durchgeführt wird, bis eine definierte Endlage erreicht ist, sei es die Gebrauchsstellung der Anhängerkupplung oder die Ruhestellung der Anhängerkupplung, je nach Ausgangssituation zu Beginn der Verfahrbewegung. Dies bedeutet mit anderen Worten, dass nach erfolgreicher Sicherheitsparameterüberprüfung eine Änderung der Sicherheitsparameter eintreten kann, ohne dass dies eine Veränderung der eingeleiteten Verfahrbewegung zur Folge hat. Wird also vor Beginn einer Verfahrbewegung beispielsweise festgestellt, dass die Motordrehzahl "Null" ist, so wird eine Verfahrbewegung eingeleitet. Diese Verfahrbewegung wird auch nicht unterbrochen, wenn während der Verfahrbewegung die Zündung eingeschaltet wird mit Folge, dass sich eine Motordrehzahl ungleich "Null" einstellt. Das Weiterfahren der Anhängerkupplung in eine Endposition auch bei Nicht-Einhaltung der sich während der Verfahrbewegung einstellenden Verfahrparameter erbringt den positiven Effekt, dass system- bzw. modulseitig stets bekannt ist, in welcher Position sich die Anhängerkupplung befindet. Es werden so undefinierte Stellungen der Anhängerkupplung vermieden. Sofern sich während einer Verfahrbewegung ergibt, dass Verfahrparameter nicht eingehalten werden, so wird die Anhängerkupplung mit Erreichen ihrer Endlage bevorzugterweise stillgesetzt, was bedeutet, dass eine erneute Einleitung einer Verfahrbewegung nur dann stattfinden kann, wenn die Sicherheitsparameter und/oder die Verfahrparameter wieder eingehalten werden.

Es kann hinsichtlich der Verfahrbewegung eine Ausnahme geben, nämlich dann, wenn der Antriebsmotor für die Anhängerkupplung einen zu hohen Motorstrom zieht und/oder die Verfahrbewegung einen vorgebbaren Grenzwert unterschreitet, beispielsweise bei "Null" liegt. In diesem Fall wird angenommen, dass die Verfahrbewegung der Anhängerkupplung nicht in die gewünschte Endlage durchgeführt werden kann, weil eine Blockade vorliegt, beispielsweise ein Körperteil, insbesondere ein Bein eines Benutzers eingeklemmt ist. In diesem Fall wird ein sofortiger Notstopp der Verfahrbewegung eingeleitet, d. h. die Anhängerkupplung verfährt nicht in die gewünschte Endlage, sondern bleibt sofort stehen. Hierdurch ist ein Einklemmschutz realisiert.

Hinsichtlich des Einklemmschutzes gibt es zwei Alternativen. Gemäß erster Alternative bleibt die Anhängerkupplung in der Notstellung stehen. Alternativ hierzu erfolgt zwecks Druckentlastung nach einem Notstopp ein leichtes Zurückverfahren der Anhängerkupplung in die entgegengesetzte Richtung, d. h. in Richtung der Endstellung, aus der die Verfahrbewegung begonnen hat.

Eine weitere Verfahrbewegung der Anhängerkupplung kann nur durch manuelle Betätigung des dafür vorgesehenen Bedienelements vorgenommen werden. Dabei erfolgt eine Verfahrbewegung durch Betätigung des Bedienelements zurück in die Endstellung, aus der die Anhängerkupplung gekommen ist, und nicht in die Endstellung, in die die Anhängerkupplung eigentlich verfahren sollte.

Das bevorzugte Bedienelement zur Einleitung einer Verschwenkbewegung ist beispielsweise als Taster oder Schalter ausgebildet und befindet sich im Kofferraum des Kraftfahrzeugs. Eine bestimmungsgemäße Betätigung der Anhängerkupplung ist mithin nur bei geöffnetem Kofferraum möglich.

Gemäß einem bevorzugten Merkmal der Erfindung verfügt das Steuermodul über einen visuellen und/oder akustischen Signalgeber, der bei Nichteinhaltung der überprüften Sicherheitsparameter ein visuelles und/oder akustisches Signal abgibt. Insoweit dient ein solcher Signalgeber dazu, dem Benutzer anzuzeigen, dass die von ihm gewünschte Verfahrbewegung der Anhängerkupplung nicht möglich ist, beispielsweise weil die überprüfte Motordrehzahl des Kraftfahrzeugmotors den vorgegebenen Sollwert überschreitet. Der Benutzer hat dann die Möglichkeit, die Voraussetzungen für eine Verschwenkbewegung, beispielsweise durch Ausschalten des Motors, zu schaffen und den Verschwenkvorgang erneut zu initialisieren.

Gemäß einem weiteren Merkmal der Erfindung verfügt das Steuermodul über einen weiteren visuellen und/oder akustischen Signalgeber, der während einer anhaltenden Verschwenkbewegung der Anhängerkupplung ein visuelles und/oder akustisches Signal abgibt. Diese bevorzugte Ausgestaltung dient dazu, einem Benutzer während des Vorgangs der Verschwenkung der Anhängerkupplung ein visuelles und/oder akustisches Signal zu geben, sodass dieser erkennen kann, dass die Verschwenkbewegung noch andauert und nicht etwa schon beendet ist. Als visuelle Signalgeber kommen insbesondere LEDs in Betracht. Diese können in das Bedienelement integriert sein und mit Betätigung des Bedienelements aufleuchten. Unterschiedliche Farbausgestaltungen sind selbstredend denkbar, beispielsweise im Sinne einer Ampelbeleuchtung.

Gemäß einem weiteren Merkmal der Erfindung ist ein weiterer visueller und/oder akustischer Signalgeber vorgesehen. Dieser dient dazu, bei Erreichen einer Endposition der Anhängerkupplung ein visuelles und/oder akustisches Signal abzugeben. oder ein Dauersignal zu unterbrechen. Auch diese Maßnahme dient der erhöhten Sicherheit. Insbesondere dient sie dazu, dem Benutzer eine beendete Verschwenkbewegung der Anhängerkupplung zu signalisieren. Für den Benutzer wird so ersichtlich, dass die angefahrene Endposition, das heißt entweder die Ruheposition oder die Arbeitsposition auch tatsächlich erreicht worden ist. Die Anzeige der tatsächlich erreichten Endposition ist deshalb von Vorteil, weil zwischen der Dauer einer Verfahrbewegung und der tatsächlichen Erreichung einer der Endpositionen eine gewisse Zeit vergehen kann, beispielsweise zur Durchführung mechanischer Verriegelungen der Anhängerkupplung. Es ist insoweit durchaus möglich, dass ein Verfahren der Anhängerkupplung bereits vollendet ist, die sichere Endposition aber noch nicht erreicht ist, weil unter Umständen durchzuführende Verriegelungen, Sensorabfragen und/oder dergleichen noch nicht abgeschlossen sind. Das nach der Erfindung vorgesehene Signalgeberkonzept stellt insgesamt sicher, dass ein Benutzer einerseits über das Andauern einer Verschwenkbewegung informiert ist, sowie andererseits darüber, ob die gewünschte Endposition tatsächlich erreicht ist oder nicht. Dabei können zur akustischen und/oder visuellen Signalausgabe sowohl zur Anzeige der Verfahrbewegung als auch zur Anzeige der erreichten Endposition ein und dieselben Signalgeber eingesetzt werden. Für eine benutzerseitige Unterscheidung können unterschiedliche Aufleuchtdauern, Blinkfrequenzen und/oder dergleichen eingesetzt werden.

Gemäß einem weiteren Merkmal der Erfindung ist ein weiterer visueller und/oder akustischer Signalgeber vorgesehen, der dazu dient, bei nicht ordnungsgemäßer Stromversorgung und/oder defektem Steuermodul ein akustisches und/oder visuelles Signal abzugeben. Das Vorhandensein eines solchen Signalgebers hat den Vorteil, dass dem Benutzer Störfälle angezeigt werden können. In einem solchen Fall kommt es nämlich weder zu einer Verfahrbewegung der Anhängerkupplung noch zum Erreichen einer gewollten Endposition. Insoweit dient ein solcher Signalgeber dazu, dem Benutzer anzuzeigen, dass die von ihm gewünschte Verfahrbewegung der Anhängerkupplung nicht möglich ist, beispielsweise weil eine nicht ordnungsgemäße Stromversorgung anliegt und/oder das Steuermodul defekt ist, so dass eine bestimmungsgemäße Verschwenkbewegung der Anhängerkupplung nicht möglich ist. In diesem Fall verbleibt die Anhängerkupplung in ihrer gesicherten Ausgangslage und es wird dem Benutzer angezeigt, dass ein Verschwenken der Anhängerkupplung aus dieser gesicherten Ausgangslage nicht möglich ist.

Verfahrensseitig wird zur **Lösung** der vorstehenden Aufgabe vorgeschlagen ein Verfahren zum Verschwenken einer mittels eines Motors vollautomatisch aus einer Ruheposition in eine Arbeitsposition und umgekehrt verschwenkbaren Anhängerkupplung eines Kraftfahrzeugs, bei dem vor Beginn der Durchführung einer Verschwenkbewegung der Anhängerkupplung die Einhaltung eines vorgebbaren Sicherheitsparameters überprüft wird, wobei die Verschwenkbewegung der Anhängerkupplung nur im Falle der Einhaltung dieses Sicherheitsparameters freigegeben wird, wobei als Sicherheitsparameter die Motordrehzahl des Kraftfahrzeugmotors überprüft wird

Eine Verfahrensdurchführung im erfindungsgemäßen Sinn ergibt die schon anhand des erfindungsgemäßen Steuermoduls beschriebenen Vorteile. Dabei ist es besonders bevorzugt, wenn vor der Prüfung der vorgebbaren Sicherheitsparameter die den Ist-Werten der Sicherheitsparameter entsprechenden Signale einer Plausibilitätsprüfung unterzogen werden. Sollte ein Signal den Anforderungen der Plausibilitätsprüfung nicht genügen, so wird das Signal als ungültig verworfen. Vorzugsweise wird die Erkennung eines ungültigen Signals dem Benutzer durch ein visuelles und/oder akustisches Signal angezeigt.

Gemäß einer weiteren bevorzugten Ausgestaltung der Erfindung ist es vorgesehen, dass die Kraftfahrzeugmotordrehzahl über einen in das Bordnetz des Kraftfahrzeugs eingebundenen CAN-Bus abgefragt wird. Hierdurch wird die im Kraftfahrzeug bestehende Infrastruktur genutzt ohne, dass zusätzliche Sensoren erforderlich sind. Ferner handelt es sich bei einem CAN-Bus um ein standardisiertes Bauteil, welches in einer Vielzahl von Kraftfahrzeugen verbaut ist. Das erfindungsgemäße Verfahren erlaubt daher mit besonderem Vorteil die Nachrüstung von Kraftfahrzeugen mit dem erfindungsgemäßen Steuermodul.

Es ist verfahrensseitig zudem bevorzugt, dass weitere Sicherheitsparameter überprüft werden, und zwar anstelle einer Überprüfung der Motordrehzahl oder in Kombination mit einer Überprüfung derselben. Es ergeben sich so die schon anhand des erfindungsgemäßen Steuermoduls beschriebenen Vorteile.

Es ist ferner bevorzugt, dass bei einer Verschwenkbewegung der Anhängerkupplung ein vorgebbarer Verschwenkparameter gemessen und ein dem Messergebnis entsprechendes Signal abgegeben wird, und bei dem dieses Signal mit einem vorgebbaren Sollwert verglichen wird, und bei dem im Falle einer Abweichung vom Sollwert die Verschwenkbewegung der Anhängerkupplung beendet wird, wobei als Verschwenkparameter die Verschwenkgeschwindigkeit der Anhängerkupplung gemessen wird.

Das erfindungsgemäße Steuermodul eignet sich insbesondere für Anhängerkupplungen der eingangs beschriebenen Art, die der Nachrüstung eines Kraftfahrzeugs dienen. Das Steuermodul kann in einfacher Weise an das Bordnetz eines Kraftfahrzeuges angeschlossen und zur benutzerseitigen Betätigung im Kofferraum montiert sein. Als Signaleingänge greift das Steuermodul sowohl fahrzeugseitige Signale über das Bordnetz als auch Sensorsignale von der kraftfahrzeugseitig zu montierenden Anhängerkupplung ab. Insgesamt wird mit dem erfindungsgemäßen Steuermodul eine sichere und einfache Handhabung einer automatisch motorisch verschwenkbaren Anhängerkupplung sichergestellt.

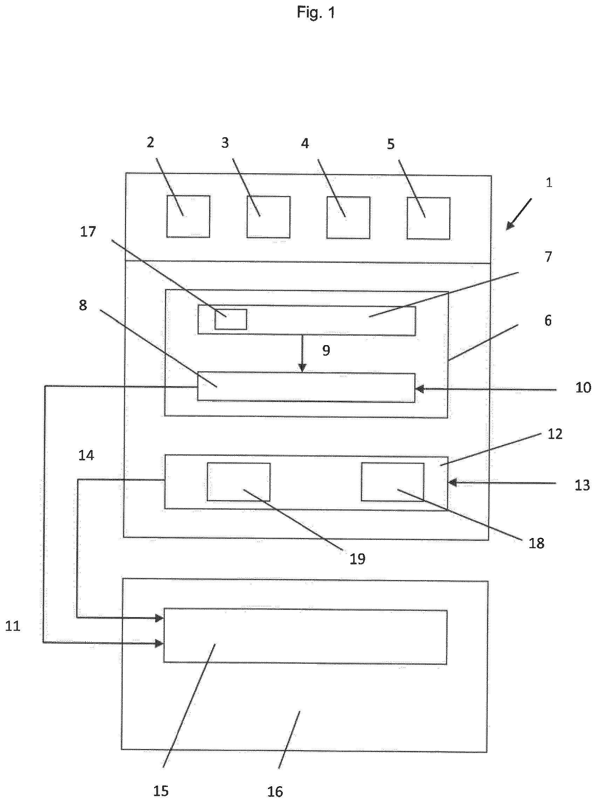

Weitere Merkmale und Vorteile der Erfindung ergeben sich aus der Beschreibung anhand Figur 1, die in rein schematischer Darstellung ein Steuermodul nach der Erfindung zeigt.

Das Steuermodul 1 dient der Steuerung einer Verschwenkbewegung einer mittels eines Motors 15 vollautomatisch aus einer Ruheposition in eine Arbeitsposition und umgekehrt verschwenkbaren Anhängerkupplung 16 eines Kraftfahrzeugs.

Das Steuermodul 1 verfügt über ein Bedienelement 2, beispielsweise in Form eines Tasters, der benutzerseitig zu betätigen ist, um eine Verschwenkbewegung der Anhängerkupplung 16 einzuleiten. Es sind ferner visuelle und akustische Signalgeber in Form eines Summers 5 sowie zweier LEDs 3 und 4 vorgesehen, die einem Benutzer den Status der Anhängerkupplung 16 anzeigen.

Das Steuermodul 1 verfügt über eine Prüfeinrichtung 12. Mittels dieser Prüfeinrichtung 12 wird vor Beginn der Durchführung einer Verschwenkbewegung der Anhängerkupplung 16 die Einhaltung vorgebbarer Sicherheitsparameter 13 geprüft. Nur im Falle der Einhaltung dieser Parameter 13 gibt die Prüfeinrichtung 12 eine Verschwenkbewegung der Anhängerkupplung 16 frei, was in der Darstellung nach Figur 1 durch das Steuersignal 14 symbolisiert ist. Das entsprechende Steuersignal aus der Vergleichseinrichtung 8 trägt das Bezugszeichen 11.

Vorliegend wird als Sicherheitsparameter 13 die Motordrehzahl des Fahrzeugmotors geprüft. Dabei erfolgt eine Abfrage der Motordrehzahl über eine entsprechende CAN-Bus-Schnittstelle 18. Ergibt diese Überprüfung, dass die Motordrehzahl nicht "Null" ist, so wird eine Verschwenkbewegung der Anhängerkupplung nicht eingeleitet. Nur für den Fall, dass die Schnittstellenabfrage über den CAN-Bus erbringt, dass die Motordrehzahl des Motors bei "Null" liegt, so wird die angeforderte Verschwenkbewegung der Anhängerkupplung freigegeben. Das Steuermodul 1 ist dazu ausgerüstet, insbesondere bei Nichtverfügbarkeit eines Motordrehzahl-Signals weitere Sicherheitsparameter 13 zu überprüfen. Es werden in diesem Zusammenhang bevorzugterweise die Stellung der Zündung und die Stellung der Heckklappe geprüft. Ergibt diese Überprüfung, dass die Zündung ausgeschaltet und die Heckklappe geöffnet sind, wird die angeforderte Verschwenkbewegung der Anhängerkupplung durchgeführt. Andernfalls unterbleibt sie.

Mit der erfindungsgemäßen Ausgestaltung ist eine Art Kaskadierung gegeben. Es wird in einem ersten Schritt die Motordrehzahl über die CAN-Bus-Schnittstelle 18 abgefragt. Ist dies nicht möglich, weil beispielsweise die Motordrehzahl über den CAN-Bus nicht verfügbar ist oder kraftfahrzeugseitig überhaupt kein CAN-Bus vorhanden ist, was beispielsweise bei älteren Kraftfahrzeugen der Fall sein kann, so ist trotz ausbleibender Abfrage der Motordrehzahl eine Verschwenkbewegung der Anhängerkupplung möglich, nämlich dann, wenn ein analoger Abgriff weiterer Sicherheitsparameter positiv ausfällt. Als diese weiteren Sicherheitsparameter kommen in Kombination insbesondere die Stellung der Zündung und die Stellung der Heckklappe in Frage.

Eine Abfrage von Zündung und Heckklappe unterbleibt dann, wenn CAN-busseitig kein Fehler vorliegt und die Abfrage ergeben hat, dass die Motordrehzahl bei "Null" ist. Alternativ im Sinne einer erhöhten Sicherheit kann eine kombinierte Abfrage sowohl der Motordrehzahl als auch der weiteren Sicherheitsparameter stattfinden.

Die zusätzlichen Sicherheitsparameter 13 werden vorliegend CAN-Bus-unabhängig über wenigstens eine separate Schnittstelle bezogen. Dies hat den Vorteil, dass im Falle eines Fehlers des CAN-Busses die zusätzlichen Sicherheitsparameter 13 weiterhin einer Sicherheitsüberprüfung zugänglich sind.

Die Prüfeinrichtung weist vorliegend eine Datenverarbeitungseinrichtung 19 auf. Die Datenverarbeitungseinheit 19 ist mit einer nicht dargestellten Datenspeichereinheit zur abrufbaren Hinterlegung von signalbezogenen Daten ausgerüstet. Die Datenverarbeitungseinrichtung 18 dient der Durchführung einer Plausibilitätskontrolle der mit den empfangenen Sicherheitsparametern 13 assoziierten Signale. Die Plausibilitätskontrolle wird vor der eigentlichen Prüfung der Sicherheitsparameter 13 durchgeführt und dient der verfahrenstechnischen Feststellung, ob die empfangenen Signale gültig sind. Nur wenn dem so ist, wird die Prüfung der Sicherheitsparameter ausschließlich anhand von gültigen Signalen durchgeführt.

Das Steuermodul 1 steuert und überwacht die elektromotorisch verschwenkbare Anhängerkupplung 16. Dabei wird das Modul 1 über eine Sicherung von der Batterie des Kraftfahrzeuges mit 12 Volt gespeist.

Wird die Heckklappe des Kraftfahrzeuges geöffnet, wird das Steuermodul 1 geweckt, das heißt in den aktiven Zustand versetzt. Es befindet sich nun im Arbeitsmodus und ist bereit, die Anhängerkupplung 16 zu verschwenken.

Um die Funktion des Steuermoduls 1 zu starten, ist das Bedienelement 2 benutzerseitig zu betätigen. Sobald das Bedienelement 2 losgelassen wird, schwenkt die Anhängerkupplung selbstständig in die Ruhe- beziehungsweise die Arbeitsposition, je nachdem aus welcher Endposition die Verfahrbewegung der Anhängerkupplung 16 startet.

Sobald die Heckklappe des Kraftfahrzeuges geschlossen wird und/oder für mehr als 1 Minute nach einem vorherigen Öffnen der Heckklappe eine Verschwenkbewegung der Anhängerkupplung 16 nicht gestartet wird, wechselt das Steuermodul 1 in den Stromsparmodus, das heißt den Stand-by-Modus. Um wieder in den Arbeitsmodus zu wechseln, ist die Heckklappe des Kraftfahrzeuges zunächst zu schließen und alsdann wieder zu öffnen.

Das Steuermodul 1 verfügt des Weiteren über eine Steuereinrichtung 6. Bestandteile dieser Steuereinrichtung 6 sind unter anderem eine Messeinrichtung 7 sowie eine Vergleichseinrichtung 8. Im bestimmungsgemäßen Verwendungsfall misst die Messeinrichtung bei einer Verschwenkbewegung der Anhängerkupplung 16 vorgebbare Verschwenkparameter, wie erfindungsgemäß vorgesehen, die Verschwenkgeschwindigkeit der Anhängerkupplung 16. In Entsprechung des erfassten Messergebnisses liefert die Messeinrichtung 7 ein Signal 9 an die Vergleichseinrichtung 8.

Im vorliegenden Fall weist die Messeinrichtung 7 eine Positionserfassungseinrichtung 17 auf. Die Positionserfassungseinrichtung 17 verfügt über eine Vielzahl von nicht dargestellten Positionssensoren, vorliegend Hall-Sensoren. Hiermit kann die jeweilige Position der Anhängerkupplung 16 entlang des Verschwenkweges detektiert werden.

Die Vergleichseinrichtung 8 vergleicht das von der Messeinrichtung 7 stammende Signal 9 mit vorgebbaren Sollwerten 13 und beendet im Falle einer Abweichung von den Sollwerten die Verschwenkbewegung der Anhängerkupplung 16. Andernfalls wird das Verschwenken der Anhängerkupplung in ihre benutzerseitig gewünschte Endposition weiter fortgeführt. Die Abweichung umfasst dabei sowohl die Überschreitung eines maximalen Sollwertes einerseits und die Unterschreitung eines minimalen Sollwertes andererseits. Durch die Vorsehung eines maximalen Sollwertes wird zum einen ein Übergeschwindigkeitsschutz realisiert. Zum anderen wird durch die Vorsehung eines minimalen Sollwertes ein Einklemmschutz realisiert.

Schaltungstechnisch können die Steuereinrichtung 6 und die Prüfeinrichtung 12 als integrale Schaltung ausgebildet sein.

Im Falle der Beendigung der Verschwenkbewegung in Folge einer Abweichung der Verschwenkparameter von den vorgegebenen Sollwerten in einer Notposition ist folgende Verfahrensführung vorgesehen:
Benutzerseitig wird die Verschwenkung aus der Notposition heraus durch Betätigung des Bedienelements 2 eingeleitet. Daraufhin werden vom Steuermodul 1 die Sicherheitsparameter 13 über den CAN-Bus abgefragt. Den erfassten Sicherheitsparametern 13 entsprechende Signale werden der Prüfeinrichtung 12 übermittelt, und es findet eine Überprüfung statt. Mittels der Datenverarbeitungseinrichtung 19 werden die empfangenen Signale zunächst einer Plausibilitätskontrolle unterzogen. Nachdem in der Plausibilitätskontrolle die Gültigkeit der Signale festgestellt wurde, werden die mittels der gültigen Signale übertragenen Sicherheitsparameter 13 von der Prüfeinrichtung mit vorgebbaren Sollwerten verglichen. Ungültige Signale können dem Benutzer mittels der Signalgeber 3, 4, 5 angezeigt werden. Sofern die empfangenen Sicherheitsparameter 13 den Sollwerten entsprechen, wird die Verschwenkbewegung der Anhängerkupplung freigegeben. Hierbei wird jedoch nicht die Verschwenkbewegung in der ursprünglichen Richtung fortgesetzt. Stattdessen wird die Anhängerkupplung 16 in entgegengesetzter Richtung zur ihrer Ausgangsposition zurückverschwenkt. Die Ausgangsposition kann entweder die Ruheposition oder die Arbeitsposition sein. Je nach dem von welcher Position aus die Verschwenkbewegung gestartet wurde. Mit der Freigabe der Verschwenkbewegung zurück zur Ausgangsposition beginnt erneut die Überwachung der Verschwenkparameter mittels der Messeinrichtung 7 und der Vergleichseinrichtung 8 der Steuereinrichtung 6. Dabei werden die der Vergleichseinrichtung 8 von der Messeinrichtung 7 signalisierten Messwerte mit vorgegebenen Sollwerten verglichen. Sofern eine Abweichung der Messwerte von den Sollwerten festgestellt wird, wird die Anhängerkupplung 16 nach einer Zeitverzögerung von maximal 500 ms erneut festgesetzt, d.h. die Verschwenkbewegung erneut beendet. In diesem Sonderfall, dass aus einer ersten Notposition auf dem Weg in die Ausgangsposition die Verschwenkbewegung in einer zweiten Notposition beendet wird, ist es vorgesehen, dass die Anhängerkupplung nicht zu der ersten Notposition zurückverschwenkt, sondern stattdessen zu ihrer ursprünglichen Ausgangsposition. Ausgangsposition können mithin nur die Ruheposition oder die Arbeitsposition sein. Hierdurch wird sichergestellt, dass die Anhängerkupplung in jedem Fall zunächst in eine sichere Position zurückverfährt, bevor dann der erneute Verschwenkvorgang eingeleitet wird.

### Bezugszeichen

- 1: Steuermodul
- 2: Bedienelement
- 3: LED
- 4: LED
- 5: Summer
- 6: Steuereinrichtung
- 7: Messeinrichtung
- 8: Vergleichseinrichtung
- 9: Signal
- 10: Sollwert
- 11: Steuersignal
- 12: Prüfeinrichtung
- 13: Sicherheitsparameter
- 14: Steuersignal (Freigabesignal)
- 15: Motor
- 16: Anhängerkupplung
- 17: Positionserfassungseinrichtung
- 18: CAN-Bus-Schnittstelle
- 19: Datenverarbeitungseinrichtung

## Patentansprüche

1. Steuermodul zur Steuerung einer Verschwenkbewegung einer mittels eines Motors (15) vollautomatisch aus einer Ruheposition in eine Arbeitsposition und umgekehrt verschwenkbaren Anhängerkupplung (16) eines Kraftfahrzeugs, mit einer Prüfeinrichtung (12), die dazu ausgebildet ist, vor Beginn der Durchführung einer Verschwenkbewegung der Anhängerkupplung (16) die Einhaltung eines vorgebbaren Sicherheitsparameters (13) zu prüfen und nur im Falle der Einhaltung dieses Sicherheitsparameters (13) eine Verschwenkbewegung der Anhängerkupplung (16) freizugeben, wobei die Prüfeinrichtung (12) dazu ausgebildet ist, als Sicherheitsparameter (13) die Motordrehzahl des Kraftfahrzeugmotors zu prüfen, wobei das Steuermodul über eine Steuereinrichtung verfügt, welche dazu ausgebildet ist, während einer Verschwenkbewegung der Anhängerkupplung (16) einen vorgebbaren Verschwenkparameter zu messen, den Messwert mit einem vorgebbaren Sollwert (10) zu vergleichen und im Falle einer Abweichung von dem Sollwert (10) die Verschwenkbewegung der Anhängerkupplung (16) zu beenden, wobei die Steuereinrichtung (6) eine Messeinrichtung (7) zur Messung des Verschwenkparameters aufweist, **dadurch gekennzeichnet dass** die Messeinrichtung (7) dazu ausgebildet ist, als Verschwenkparameter die Verschwenkgeschwindigkeit der Anhängerkupplung zu messen..

2. Steuermodul nach Anspruch 1, **gekennzeichnet durch** eine erste Schnittstelle, insbesondere eine CAN-Bus-Schnittstelle, zur Abfrage der Motordrehzahl des Kraftfahrzeugmotors.

3. Steuermodul nach einem der Ansprüche 1 oder 2, **dadurch gekennzeichnet, dass** die Prüfeinrichtung (12) dazu ausgebildet ist, bei Nichtverfügbarkeit der Motordrehzahl als weitere Sicherheitsparameter (13) den Schaltzustand der Kraftfahrzeugzündung und/oder die Stellung der Kraftfahrzeugheckklappe zu prüfen.

4. Steuermodul nach Anspruch 3, **gekennzeichnet durch** wenigstens eine weitere, insbesondere Nicht-CAN-Bus- Schnittstelle zur Abfrage der weiteren Sicherheitsparameter (13).

5. Steuermodul nach einem der Ansprüche 1 bis 3, **dadurch gekennzeichnet, dass** die Prüfeinrichtung (12) eine Datenverarbeitungseinrichtung (19) zum Empfang und zur Verarbeitung von mit den Sicherheitsparametern (13) assoziierten Signalen aufweist, wobei die Datenverarbeitungseinrichtung (19) dazu ausgebildet ist, die empfangenen Signale einer Plausibilitätskontrolle zu unterziehen.

6. Steuermodul nach Anspruch 4, **dadurch gekennzeichnet, dass** die Datenverarbeitungseinrichtung (19) zum Zwecke der Plausibilitätskontrolle eine Datenspeichereinheit aufweist, die dazu dient, signalbezogene Informationen zeitbezogen abrufbar zu speichern.

7. Verfahren zum Verschwenken einer mittels eines Motors (15) vollautomatisch aus einer Ruheposition in eine Arbeitsposition und umgekehrt verschwenkbaren Anhängerkupplung (16) eines Kraftfahrzeugs, bei dem vor Beginn der Durchführung einer Verschwenkbewegung der Anhängerkupplung (16) die Einhaltung vorgebbarer Sicherheitsparameter (13) überprüft wird, wobei die Verschwenkbewegung der Anhängerkupplung (16) nur im Falle der Einhaltung dieser Sicherheitsparameter (13) freigegeben wird, wobei als Sicherheitsparameter (13) die Motordrehzahl des Kraftfahrzeugmotors überprüft wird, wobei während einer Verschwenkbewegung der Anhängerkupplung (16) ein vorgebbarer Verschwenkparameter gemessen und ein dem Messergebnis entsprechendes Signal (9) abgegeben wird, und bei dem dieses Signal (9) mit einem vorgebbaren Sollwert (10) verglichen wird, und bei dem im Falle einer Abweichung vom Sollwert (10) die Verschwenkbewegung der Anhängerkupplung (16) beendet wird, **dadurch gekennzeichnet, dass** als Verschwenkparameter die Verschwenkgeschwindigkeit der Anhängerkupplung (16) gemessen wird..

8. Verfahren nach Anspruch 7, **dadurch gekennzeichnet, dass** die Motordrehzahl des Kraftfahrzeugmotors über einen an das Bordnetz des Kraftfahrzeugs angeschlossenen CAN-Bus abgefragt wird.

9. Verfahren nach einem der Ansprüche 7 oder 8, **dadurch gekennzeichnet, dass** zusätzlich zu der Überprüfung der Motordrehzahl oder bei Nichtverfügbarkeit der Motordrehzahl als weitere Sicherheitsparameter (13) der Schaltzustand der Kraftfahrzeugzündung und/oder die Stellung der Heckklappe überprüft werden.

10. Verfahren nach einem der Ansprüche 7 bis 9, **dadurch gekennzeichnet, dass** sicherheitsparameterbezogene Signale vor deren Überprüfung einer Plausibilitätskontrolle unterzogen werden.

11. Verfahren nach Anspruch 10, **dadurch gekennzeichnet, dass** zum Zwecke der Plausibilitätskontrolle signalbezogene Informationen zeitbezogen abrufbar gespeichert werden.

12. Verfahren nach einem der Ansprüche 7 bis 11, **dadurch gekennzeichnet, dass** die Überprüfung der Sicherheitsparameter (13) ausschließlich durch manuelle Betätigung eines Bedienelements eingeleitet wird.

13. Verfahren nach einem der Ansprüche 7 bis 12, **dadurch gekennzeichnet, dass** vor Beginn der Durchführung einer Verschwenkbewegung der Anhängerkupplung (16) aus einer Notposition heraus die Einhaltung der vorgebbaren Sicherheitsparameter (13) überprüft wird, wobei die Verschwenkbewegung der Anhängerkupplung (16) aus der Notposition heraus nur im Falle der Einhaltung dieser Sicherheitsparameter (13) freigegeben wird.

## Claims

1. A control module for controlling a pivoting movement of a trailer coupling (16) of a motor vehicle, which trailer coupling (16) can be pivoted in a fully automatic manner from a rest position into a working position and vice versa by means of a motor (15), comprising a check device (12), which is configured to check if a pre-determinable security parameter (13) is observed before starting to realize a pivoting movement of the trailer coupling (16) and only in case of observing this security parameter (13) a pivoting movement of the trailer coupling (16) will be allowed, wherein the check device (12) is configured to check the motor speed of the vehicle motor as security parameter (13), wherein the control module comprises a control device, which is configured to measure a pre-determinable pivoting parameter during a pivoting movement of the trailer coupling (16), to compare the measured value with a pre-determinable nominal value (10) and to stop the pivoting movement of the trailer coupling (16) in case of a divergence from the nominal value (10), wherein the control device (6) comprises a measuring device (7) for measuring the pivoting parameter, **characterized in that** the measuring device (7) is configured to measure the pivoting speed of the trailer coupling as pivoting parameter.

2. A control module according to claim 1, **characterized by** a first interface, in particular a CAN bus interface, for querying the motor speed of the vehicle.

3. A control module according to claim 1 or 2, **characterized in that** the check device (12) is configured to check the switching state of the vehicle ignition and/or the position of the vehicle tailgate as other security parameters (13), if the motor speed is not available.

4. A control module according to claim 3, **characterized by** at least one other, especially non CAN bus interface for querying the other security parameters (13).

5. A control module according to one of the claims 1 through 3, **characterized in that** the check device (12) comprises a data processing device (19) for receiving and processing signals associated with the security parameters (13), wherein the data processing device (19) is configured to submit the received signals to a plausibility check.

6. A control module according to claim 4, **characterized in that** the data processing device (19) comprises a data storage unit for the purpose of the plausibility check, which data storage unit serves for storing signal-related information in a time-related retrievable manner.

7. A method for pivoting a trailer coupling (16) of a motor vehicle, which trailer coupling (16) can be pivoted by means of a motor (15) in a fully automatic manner from a rest position into a working position and vice versa, in which method it is checked, before executing a pivoting movement of the trailer coupling (16), whether pre-determinable security parameters (13) are observed, wherein the pivoting movement of the trailer coupling (16) will only be allowed, if these security parameters (13) are observed, wherein the motor speed of the vehicle motor will be checked as security parameter (13), wherein a pre-determinable pivoting parameter is measured during a pivoting movement of the trailer coupling (16) and a signal (9) corresponding to the measurement result is output, and in which this signal (9) is compared with a pre-determinable nominal value (10) and in case of a divergence from the nominal value (10), the pivoting movement of the trailer coupling (16) is stopped, **characterized in that** the pivoting speed of the trailer coupling (16) is measured as pivoting parameter.

8. A method according to claim 7, **characterized in that** the motor speed of the vehicle motor is queried via a CAN bus connected to the on-board electric circuit of the vehicle.

9. A method according to one of the claims 7 or 8, **characterized in that** in addition to the verification of the motor speed or in case of a non-availability of the motor speed, the switching state of the vehicle ignition and/or the position of the tailgate will be checked as other security parameters (13).

10. A method according to one of the claims 7 through 9, **characterized in that** security parameter-related signals are subjected to a plausibility check before their verification.

11. A method according to claim 10, **characterized in that** signal-related information is stored in a time-related retrievable manner for the purpose of the plausibility check.

12. A method according to one of the claims 7 through 11, **characterized in that** the verification of the security parameters (13) is exclusively initiated by a manual actuation of an actuation element.

13. A method according to one of the claims 7 through 12, **characterized in that** before executing a pivoting movement of the trailer coupling (16) from an emergency position, it is checked, if the pre-determinable security parameters (13) are observed, wherein the pivoting movement of the trailer coupling (16) from the emergency position is only allowed, if these security parameters (13) are observed.

## Revendications

1. Module de commande pour commander un mouvement de pivotement d'un accouplement de remorque (16) d'un véhicule moteur, l'accouplement étant susceptible d'être pivoté de manière complètement automatique d'une position de repos dans une position de travail et vice versa par moyen d'un moteur (15), comprenant un dispositif de contrôle (12), qui est configuré pour contrôler l'observance d'un paramètre de sécurité (13) avant de commencer l'exécution d'un mouvement de pivotement de l'accouplement de remorque(16) et seulement dans le cas de l'observance de ce paramètre de sécurité (13) permettre un mouvement de pivotement de l'accouplement de remorque (16), le dispositif de contrôle (12) étant configuré pour contrôler la vitesse du moteur du moteur du véhicule moteur comme paramètre de sécurité (13), le module de commande comprenant un dispositif de commande, qui est configuré pour mesurer un paramètre de pivotement pré-déterminable pendant un mouvement de pivotement de l'accouplement de remorque (16), pour comparer la valeur mesurée avec une valeur cible pré-déterminable (10) et pour terminer le mouvement de pivotement de l'accouplement de remorque (16) dans le cas d'une divergence de la valeur cible (10), le dispositif de commande (6) comprenant un dispositif de mesure (7) pour mesurer le paramètre de pivotement, **caractérisé en ce que** le dispositif ce mesure (7) est configuré pour mesurer la vitesse de pivotement de l'accouplement de remorque comme paramètre de pivotement.

2. Module de commande selon la revendication 1, **caractérisé par** une première interface, notamment une interface de bus CAN, pour demander la vitesse du moteur du moteur de véhicule moteur.

3. Module de commande selon l'une des revendications 1 ou 2, **caractérisé en ce que** le dispositif de contrôle (12) est configuré pour contrôler l'état de fonctionnement de l'allumage du véhicule moteur et/ou la position du couvercle de coffre du véhicule moteur comme d'autres paramètres de sécurité, si la vitesse du moteur n'est pas disponible.

4. Module de commande selon la revendication 3, **caractérisé par** au moins une autre interface, notamment de bus de non CAN, pour demander les autres paramètres de sécurité (13).

5. Module de commande selon l'une des revendications 1 à 3, **caractérisé en ce que** le dispositif de contrôle (12) comprend un dispositif de traitement de données (19) pour recevoir et pour traiter des signaux associés aux paramètres de sécurité, le dispositif de traitement de données (19) étant configuré pour soumettre les signaux reçus à un contrôle de plausibilité.

6. Module de commande selon la revendication 4, **caractérisé en ce que** le dispositif de traitement de données (19) comprend une unité de stockage de données aux fins du contrôle de plausibilité, laquelle unité de stockage de données sert à stocker des informations se référant aux signaux de manière consultable et avec une dépendance du temps.

7. Procédé pour pivoter un accouplement de remorque (16) d'un véhicule moteur, l'accouplement étant susceptible d'être pivoté de manière complètement automatique d'une position de repos dans une position de travail et vice versa par moyen d'un moteur (15), dans lequel l'observance des paramètres de sécurité (13) est contrôlée avant de commencer l'exécution d'un mouvement de pivotement de l'accouplement de remorque(16) et seulement dans le cas de l'observance de ces paramètres de sécurité (13) le mouvement de pivotement de l'accouplement de remorque (16) sera permis, la vitesse du moteur du moteur du véhicule moteur étant contrôlée comme paramètre de sécurité (13), dans lequel un paramètre de pivotement pré-déterminable est mesuré pendant un mouvement de pivotement de l'accouplement de remorque(16) et un signal (9) correspondant au résultat de mesure est sorti, et dans lequel ce signal (9) est comparé avec une valeur cible pré-déterminable (10), et dans lequel dans le cas d'une divergence de la valeur cible (10), le mouvement de pivotement de l'accouplement de remorque(16) sera terminé, **caractérisé en ce que** la vitesse de pivotement de l'accouplement de remorque (16) est mesurée comme paramètre de pivotement.

8. Procédé selon la revendication 7, **caractérisé en ce que** la vitesse du moteur du moteur du véhicule moteur est demandée via un bus CAN connecté au réseau de bord du véhicule moteur.

9. Procédé selon l'une des revendications 7 ou 8, **caractérisé en ce qu'**en plus du contrôle de la vitesse du moteur ou dans le cas où la vitesse du moteur n'est pas disponible, l'état de fonctionnement de l'allumage du véhicule moteur et/ou la position du couvercle de coffre du véhicule moteur sont contrôlés comme d'autres paramètres de sécurité (13).

10. Procédé selon l'une des revendications 7 à 9, **caractérisé en ce que** des signaux se référant aux paramètres de sécurité sont soumis à un contrôle de plausibilité avant la vérification de ceux-ci.

11. Procédé selon la revendication 10, **caractérisé en ce que** des informations se référant aux signaux sont stockées de manière consultable et avec une dépendance du temps aux fins du contrôle de plausibilité.

12. Procédé selon l'une des revendications 7 à 11, **caractérisé en ce que** le contrôle des paramètres de sécurité (13) est exclusivement initié par un actionnement manuel d'un élément d'actionnement.

13. Procédé selon l'une des revendications 7 à 12, **caractérisé en ce que** l'observance des paramètres de sécurité (13) pré-déterminables est contrôlée avant de commencer à réaliser un mouvement de pivotement de l'accouplement de remorque (16) à partir d'une position d'urgence, dans lequel le mouvement de pivotement de l'accouplement de remorque (16) à partir de la position d'urgence n'est permis que dans le cas de l'observance de ces paramètres de sécurité (13).
